# EUROPÄISCHE PATENTANMELDUNG

(11) **EP 3 720 124 A1**
(43) Veröffentlichungstag der Anmeldung: **07.10.2020**
(21) Anmeldenummer: 19167536.2
(22) Anmeldetag: 05.04.2019
(51) Int. Cl.: H04N 9/31

(54) **KRAFTFAHRZEUGSCHEINWERFER**

(71) Anmelder: ZKW Group GmbH, 3250 Wieselburg (AT)
(72) Erfinder: Schantl, Patrik, 2604 Theresienfeld (AT); Koller, Jan, 1120 Wien (AT); Mitterlehner, Thomas, 3240 Mank (AT)
(74) Vertreter: Patentanwaltskanzlei Matschnig & Forsthuber OG

(57) **Zusammenfassung**

Die Erfindung betrifft einen Kraftfahrzeugscheinwerfer (1), umfassend
- zumindest eine Laserlichtquelle (10,11,12),
- ein durch die zumindest eine Laserlichtquelle (10,11,12) bestrahlbares und anregbares Konversionsmittel (4) zur Abstrahlung von sichtbarem Licht,
- zumindest ein im Strahlengang zwischen der zumindest einen Laserlichtquelle (10,11,12) und dem Konversionsmittel (4) angeordnete steuerbare Ablenkvorrichtung (2) zur räumlichen Ablenkung des Laserlichts innerhalb eines in eine Lichtverteilung abbildbaren Konversionsbereichs (40, 41, 42) des Konversionsmittels (4),
- eine Projektionsoptik (3) zur Abbildung des innerhalb des Konversionsbereiches (40,41,42) gewandelten Lichts hin zu einer auf eine Fläche projizierbaren Lichtverteilung, und
- zumindest eine Modulationsvorrichtung (200)
a) zur zeitlichen Steuerung der Laserlichtintensität des durch die zumindest eine Laserlichtquelle (10, 11, 12) abgestrahlten Lichts, sowie
b) zur Steuerung der räumlichen Ablenkung des Laserlichts durch die Ablenkvorrichtung (2),

wobei der Modulationsvorrichtung (200) zur digitalen Umsetzung der zeitlichen Steuerung ein Mikrocontroller (100) zugeordnet ist, wobei der Mikrocontroller (100) zumindest einen Timer und einen DMA-Controller aufweist, wobei der Mikrocontroller (100) dazu eingerichtet ist, in Abhängigkeit von dem Timer direkt DMA Operationen zu triggern, mittels deren die zeitliche und räumliche Steuerung gemäß den Punkten a) und b) erfolgt.

## Beschreibung

Die Erfindung betrifft einen Kraftfahrzeugscheinwerfer, umfassend zumindest eine Laserlichtquelle, ein durch die zumindest eine Laserlichtquelle bestrahlbares und anregbares Konversionsmittel zur Abstrahlung von sichtbarem Licht, zumindest eine im Strahlengang zwischen der zumindest einen Laserlichtquelle und dem Konversionsmittel angeordnete steuerbare Ablenkvorrichtung zur räumlichen Ablenkung des Laserlichts innerhalb eines in eine Lichtverteilung abbildbaren Konversionsbereichs des Konversionsmittels, eine Projektionsoptik zur Abbildung des innerhalb des Konversionsbereiches gewandelten Lichts hin zu einer auf eine Fläche, insbesondere eine Fahrbahn, projizierbaren Lichtverteilung, und zumindest eine Modulationseinheit
a) zur zeitlichen Steuerung der Laserlichtintensität des durch die zumindest eine Laserlichtquelle abgestrahlten Lichts, sowie
b) zur Steuerung der räumlichen Ablenkung des Laserlichts durch die Ablenkvorrichtung,
wobei der Modulationseinheit zur digitalen Umsetzung der zeitlichen Steuerung ein Mikrocontroller zugeordnet ist.

Ferner betrifft die Erfindung ein Kraftfahrzeug umfassend zumindest einen erfindungsgemäßen Kraftfahrzeugscheinwerfer.

Bei der Entwicklung der gegenwärtigen Scheinwerfersysteme steht regelmäßig der Wunsch im Vordergrund, ein Lichtbild auf die Fahrbahn projizieren zu können, das rasch geändert und den jeweiligen Verkehrs-, Straßen- und Lichtbedingungen angepasst werden kann. Dazu werden verschiedene Scheinwerfer, beispielsweise Haupt- und Zusatzscheinwerfer, eingesetzt, die unterschiedliche Lichtbilder auf die Fahrbahn projizieren. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell entspricht das Lichtbild im verwendeten Sinn einer Projektion auf eine vertikale Fläche entsprechend den einschlägigen Normen, die sich auf die KFZ-Beleuchtungstechnik beziehen.

Kraftfahrzeugscheinwerfer zur Erzeugung einer variablen Lichtverteilung können beispielsweise eine oder mehrere abstrahlungsintensitätsmodulierbare Lichtquellen aufweisen, wobei damit emittierte Lichtstrahlen über eine verschwenkbare Reflektoreinheit auf eine Fahrbahn projiziert werden kann.

Die Ansteuerung der Lichtquellen in Form einer Modulation der Intensität des emittierten Lichts, sowie die präzise Ansteuerung der Verschwenk- bzw. der Reflektoreinheit ist häufig komplex und schwierig, da sich beispielsweise zeitlich nicht exakt synchrone Steuersignale in einer unerwünschten Beeinträchtigung des projizierten Lichtbilds bemerkbar machen können, welche sogar die Einhaltung gesetzlicher Grenzwerte erschweren kann. Eine entsprechend geeignete Ansteuerung eines solchen Kraftfahrzeugscheinwerfers kann aufwändig und teuer sein.

Bisher war es nicht möglich, eine zufriedenstellende Synchronisation mittels einer Steuerung über einen Mikrocontroller herbeizuführen. Die Gründe hierfür liegen darin, dass die Umsetzung eines Timings bei einem Mikrocontroller für gewöhnlich durch einen internen Hardwaretimer erfolgt. Dieser zählt mit einer eingestellten Frequenz hoch und löst bei Erreichen eines vorgegebenen Wertes ein Interrupt aus. Dabei wird das Hauptprogramm unterbrochen und der Programmablauf an einer anderen Stelle fortgesetzt. In dieser Interruptroutine können die für eine Änderung der Laserhelligkeit notwendigen Befehle ausgegeben werden. Diese Methode hat allerdings folgende Nachteile:

### 1. Zeitverzögerung beim Unterbrechen und Fortsetzen des Hauptprogramms:

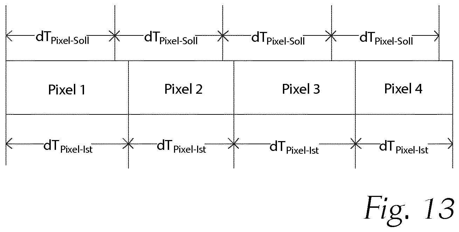

Der Mikrocontroller muss beim Unterbrechen des Hauptprogramms den aktuellen Zustand (Programmadresse + diverse Register) sichern um nach dem Interrupt das Hauptprogramm fortsetzen zu können. Dieser Vorgang benötigt je nach Mikrocontroller und Taktrate eine im Timing nicht zu vernachlässigende Zeit. Je höher die Schwingfrequenz der Ablenkeinheit und die Anzahl der darzustellenden Pixel pro Periode sind, desto stärker wird dadurch die Bilddarstellung beeinflusst. Die Änderung in der Helligkeit des Lasers erfolgt damit nicht an der Pixelkante sondern etwas später. Dies kann sowohl zu einem ungenauen Timing als auch zu einem Jitter führen, wenn die Zeit für das Unterbrechen des Hauptprogramms nicht immer gleich lange dauert (siehe Fig. 13).

### 2. Hauptprogramm kann nicht parallel fortgeführt werden:

Handelt es sich beim Mikrocontroller um eine Variante mit nur einem CPU Kern, können in der Zeit der laufenden Interruptroutinen keine anderen Aktionen ausgeführt werden (mit Ausnahme von Interrupts mit höherer Priorität). Je häufiger damit Interrupts auftreten, desto stärker werden Berechnungen im Hauptprogramm beeinflusst. Dies begrenzt die Anzahl von darstellbaren Pixeln pro Schwingungsperiode der Abblenkeinheit. Anders ausgedrückt, bestand eine konventionelle Methode unter Verwendung eines Mikrocontrollers darin, Daten von einer Eingabe-Ausgabe-Einheit in den Arbeitsspeicher zu transferieren und ein Prozessorregister zur Zwischenspeicherung zu nutzen. Erst werden die Daten vom Prozessor in das interne Register eingelesen, um dann in einem weiteren Schritt in den Arbeitsspeicher verschoben zu werden. Dafür sind viele Taktschritte notwendig, in denen der Prozessor nicht für die Ausführung anderer Befehle zur Verfügung steht, und somit wird die Ausführungsgeschwindigkeit laufender Programme verringert.

Aus diesem Grund wurde bisher anstelle eines Mikrocontrollers die Ansteuerung über ein FPGA oder ASIC für eine qualitativ hochwertige Darstellung des Lichtbildes bevorzugt.

Es ist eine Aufgabe der Erfindung, die Nachteile im Stand der Technik zu überwinden.

Die Aufgabe wird durch ein eingangs genanntes Verfahren zur Ansteuerung eines Kraftfahrzeugscheinwerfers gelöst, wobei erfindungsgemäß der Mikrocontroller zumindest einen Timer und einen DMA-Controller aufweist, wobei der Mikrocontroller dazu eingerichtet ist, in Abhängigkeit von dem Timer direkt DMA Operationen zu triggern, mittels deren die zeitliche und räumliche Steuerung gemäß den Punkten a) und b) erfolgt.

Dadurch ist es möglich, die Steuerung gemäß den Punkten a) und b) auszuführen, ohne Interrupt Routinen beim Mikrocontroller auszulösen, sodass der Takt durch den Mikrocontroller exakt eingehalten werden kann und unabhängig von weiteren Rechenaufgaben des Hauptprozessors des Mikrocontrollers exakt synchronisiert bleibt.

Der direkte Speicherzugriff (DMA, "Direct Memory Access") dient zum Datentransport zwischen dem Arbeitsspeicher und der Peripherie, welche beispielsweise gesondert ausgeführte Module sein können und ist eine konzeptionelle Schaltungs- und Steuermaßnahme, die über spezielle Datenleitungen eine Verbindung zwischen den Modulen und dem Arbeitsspeicher selbst herstellt. Dadurch können die Daten ohne Umweg über den Prozessor direkt in den Speicher geschrieben werden, und in umgekehrter Richtung vom Speicher zum Modul, während die Ausführungsgeschwindigkeit des Prozessors für laufende Programme weniger beeinflusst wird. Mit anderen Worten führt ein DMA zu einer Entlastung des Prozessors. Neben einem Geschwindigkeitszuwachs bei speicherintensiven Anwendungen ermöglicht die Verwendung von DMA-Controllern außerdem sehr hohe Datenraten.

Häufig gibt es nur eine reale DMA-Leitung. Der Zugriff der unterschiedlichen Module wird dabei anhand eines Index unterschieden. Demnach darf ein DMA-Index nur einem Gerät zugeordnet werden. Der Index gibt die Nummer des DMA-Kanals an. In einer Ausführungsform können beispielsweise 8 DMA-Kanäle vorgesehen sein. Dabei können z.B. die Kanäle 0, 2 und 4 für interne Zwecke bereits fest vergeben und die Kanäle 1, 3, 5, 6 und 7 frei belegt werden. Die Kanäle können aber auch sehr umfassend konfigurierbar sein und mit 8,16 und 32 bit einzeln oder auch blockweise transferieren. In modernen Chipsätzen von Prozessoren oder Mikrocontrollern ist der DMA-Controller bereits integriert.

Zur möglichst exakten Erzeugung der Referenzzeiten kann vorgesehen sein, dass der Mikrocontroller 100 einen DMA-Controller und ein Compare-Register aufweist, wobei der Mikrocontroller 100 dazu eingerichtet ist, den Timer mit über einen DMA-Kanal zur Verfügung gestellten Wert zu vergleichen, um bei Feststellung von Wertegleichheit keine Interrupt-Operation, sondern eine DMA-Operation auszulösen, die zur Festlegung der zeitlichen Abfolge der Steuerung gemäß den Punkten a) und b) eingesetzt ist.

Insbesondere kann vorgesehen sein, dass der Kraftfahrzeugscheinwerfer zumindest zwei Laserlichtquellen, vorzugsweise drei, vier fünf oder mehr Laserlichtquellen, aufweist, die zur Abstrahlung von Licht auf die Ablenkvorrichtung und damit auf das Konversionsmittel eingerichtet sind, wobei die Abstrahlung der Laserlichtquellen auf das Konversionsmittel dergestalt zueinander versetzt ist, dass zeilenförmig formschlüssig nebeneinander und/oder übereinanderliegende Konversionsbereiche an dem Konversionsmittel durch horizontale und/oder vertikale Ablenkung des Laserlichts der Laserlichtquellen ausleuchtbar sind, wobei jeder Laserlichtquelle ein Abschnitt des Konversionsbereich zugeordnet ist, wobei die Ablenkvorrichtung zur Ablenkung des Laserlichts der Laserlichtquellen zumindest einen steuerbaren Spiegel aufweist, wobei insbesondere vorgesehen sein kann, dass mehrere ansteuerbare Spiegel vorgesehen sind, mittels welchen die Ablenkung des Laserlichts einzeln vorgenommen werden kann.

Vorzugsweise kann vorgesehen sein, dass der Kraftfahrzeugscheinwerfer zumindest zwei Laserlichtquellen aufweist, die zur Abstrahlung von Licht auf die Ablenkvorrichtung und damit auf das Konversionsmittel eingerichtet sind, wobei die Abstrahlung der Laserlichtquellen auf das Konversionsmittel dergestalt zueinander vertikal versetzt ist, dass zeilenförmig formschlüssig übereinanderliegende Konversionsbereiche an dem Konversionsmittel durch horizontale Ablenkung des Laserlichts der Laserlichtquellen ausleuchtbar sind, wobei jeder Laserlichtquelle ein zeilenförmiger Konversionsbereich zugeordnet ist.

Insbesondere kann vorgesehen sein, dass der Mikrocontroller dazu eingerichtet ist, zumindest einen Helligkeitsdatensatz zur Ansteuerung der zumindest einen Laserlichtquelle über einen Datenbus seriell an die Modulationseinheit zu übertragen, wobei der Helligkeitsdatensatz ein Feld an Dateneinträgen enthält, wobei jeder Dateneintrag die Soll-Helligkeit eines Pixels mit vorgegebener Höhe und Breite im Lichtbild einer Lichtverteilung einer Laserlichtquelle repräsentiert, wobei jeder Laserlichtquelle ein Leuchtkanal der Modulationseinheit zugeordnet ist, wobei jedem Leuchtkanal ein gemeinsames Taktsignal über eine Taktleitung und ein Steuersignal über eine Steuerleitung zugeführt ist, wobei jedem Leuchtkanal ein Kanal-Wandler zugeordnet ist, wobei jeder Kanal-Wandler dazu eingerichtet ist, den zumindest einen Helligkeitsdatensatz von dem Datenbus seriell unter Berücksichtigung des Taktsignals zu empfangen und den zumindest einen Helligkeitsdatensatz sukzessive über einen, jedem Kanal-Wandler zugeordneten finalen Bus parallel zu übertragen, wenn ein Steuersignal über die eine der Modulationseinheit zugeordnete Steuerleitung von dem Mikrocontroller empfangen wird. Die Erfindung kann zwei, drei, vier, fünf oder mehr Leuchtkanäle umfassen.

Vorzugsweise kann vorgesehen sein, dass jedem finalen Bus der Modulationseinheit ein Digital-zu-Analog-Konverter zugeordnet ist, wobei jeder Digital-zu-Analog-Konverter dazu eingerichtet ist, den zumindest einen Helligkeitsdatensatz von dem finalen Bus parallel zu empfangen und in jeweils ein analoges Treibersignal für die jeweilige Laserlichtquelle zu konvertieren. Insbesondere kann dabei vorgesehen sein, dass jeder Digital-zu-Analog-Konverter als R/2R-Netzwerk ausgebildet ist.

Vorzugsweise kann vorgesehen sein, dass die Übertragung des zumindest einen Helligkeitsdatensatz von dem Mikrocontroller hin zu der Modulationseinheit über eine Serial Peripheral Interface-Schnittstelle über den Datenbus erfolgt.

Anders ausgedrückt, kann zur Erfindung Folgendes gesagt werden:
Viele moderne Mikrocontroller verfügen über einen DMA Controller. Dabei handelt es sich um einen Co-Prozessor, um den Core beim Kopieren von Daten im Speicher von A nach B zu entlasten. Dieser wird beispielsweise beim Handling großer Datenmengen an externen Interfaces des Mikrocontrollers (SPI, UART, ...) eingesetzt. Das Kopieren der Daten an eine Speicheradresse erfolgt damit nahezu ohne Beeinflussung des Hauptprogramms.

Durch die Möglichkeiten unterschiedliche DMA Kanäle in einer Kette aneinander zu reihen bietet sich dies für einen Einsatz bei der Modulation der Laserhelligkeit an. Zusätzlich muss der im Mikrocontroller verwendete Timer die Möglichkeit bieten, statt einem Interrupt eine DMA Operation zu triggern. Sind diese Voraussetzungen vorhanden, kann eine Lasermodulation wie nachfolgend am Beispiel eines 1D Konzept beschrieben umgesetzt werden.

### 1) Erzeugen der Referenzzeiten für Pixeltiming:

Für die Erzeugung der Referenzzeiten kommt eine Kombination aus Timer und DMA Kanal zum Einsatz. Mit jedem Compare-Event wird das Pixeltimingsignal auf logisch 1 gesetzt und von einen DMA Kanal der nächste Wert aus einer vorbereiteten Timing Tabelle in das Compare Register des Timers geschrieben. Der DMA Kanal ist dabei so konfiguriert, dass dessen Source Adresse nach erfolgreichem Schreibvorgang automatisch auf den nächsten Tabelleneintrag gesetzt wird.

### 2) Erzeugen der gewünschten Lichtverteilung

Die Modulation der Laserkanäle erfolgt durch eine zweite Gruppe von DMA Operationen, die über einen DMA Link vom Pixeltiming getriggert wird. Hier schreibt ein DMA Kanal die Helligkeitsdaten spaltenweise aus einem Array von Helligkeitsdaten in einen Zwischenbuffer. Dieser dient zur Umgruppierung der Daten für den nächsten Schritt und kann je nach interner Struktur auch entfallen.

Die Daten aus dem Zwischenbuffer werden im letzten Schritt von einem weiteren verlinkten DMA Kanal an das vorgesehene Modulationsinterface geschrieben. Ein derartiges Interface kann beispielsweise ein GPIO Pin Register, ein PWM Register oder eine Kommunikationsschnittstelle wie SPI sein.

Die beschriebene Art der Umsetzung kommt ohne einen Eingriff des Mikrocontroller Cores aus. Damit fallen auch etwaige Einschränkungen eines Mikrocontrollers betreffend die prozedurale Abarbeitung von Befehlen weg. Eine derartige Umsetzung hat damit folgende Effekte auf die zuvor beschriebenen Restriktionen in der Erzeugung der gewünschten Lichtverteilung:

### 1. Die Zeitverzögerung beim Unterbrechen und Fortsetzen des Hauptprogramms sind geringer:

Da das Hautprogramm nicht durch einen Interrupt unterbrochen werden muss, gibt es eine deutlich geringere Zeitverzögerung zwischen dem Timerevent und dem Ausführen der Aktion über die DMA Kanäle.

### 2. Hauptprogramm kann parallel fortgeführt werden:

Da das Hauptprogramm nicht unterbrochen wird, sondern die Steuerung der DMA Kanäle über den DMA Controller passiert, wird das Hauptprogramm kaum negativ beeinflusst.

Durch die stark verkürzten Zeitverzögerungen zwischen dem gewünschten und tatsächlichen Umschalten der Laserhelligkeit können bei gleicher Mikrocontrollerperformance mehr Pixel pro Zeiteinheit dargestellt werden. Alternativ können komplexerer Algorithmen im Hauptprogramm implementiert werden, da deren Performance kaum von den DMA Operationen beeinflusst wird.

Ein weiterer Vorteil dieses Konzepts ist die nur durch die vorhandenen DMA Kanäle und die notwendige Ansteuerfrequenz begrenzte Skalierbarkeit zur Verwendung für mehrere Laserkanäle oder eines 2D Konzepts, also eines Konzepts, in dem ein Laserstrahl entlang von zwei normal zueinander orientierten Achsen abgelenkt werden kann.

Die Erfindung und weitere Vorteile werden im Folgenden anhand von nicht einschränkenden Ausführungsbeispielen näher beschrieben, die in den beiliegenden Zeichnungen veranschaulicht sind. Die Zeichnungen zeigen in
- Fig. 1: einen erfindungsgemäßen Fahrzeugscheinwerfer mit drei Lichtquellen und einer um eine Achse verschwenkbaren Ablenkvorrichtung,
- Fig. 2: ein Konversionsmittel eines Fahrzeugscheinwerfers nach der Fig. 1 mit einzelnen Leuchtkanälen in Form von Lichtzeilen,
- Fig. 3: ein elektrisches Blockschaltbild eines Ausführungsbeispiels für einen Mikrocontrollers mit gekennzeichneten Datenflüssen gemäß dem erfindungsgemäßen Scheinwerfer sowie Verfahren,
- Fig. 4: ein elektrisches Blockschaltbild eines Ausführungsbeispiels einer Schaltung zur Verteilung von Lichtdaten vom Mikrocontroller an die Leuchtkanäle,
- Fig. 5: einen Schaltplan für einen Digital-zu-Analog-Konverters mittels einem R/2R-Netzwerk und einer Treiberschaltung für eine Lichtquelle,
- Fig. 6: den zeitlichen Verlauf einer Spiegelablenkung der Ablenkeinheit,
- Fig. 7: den zeitlichen Verlauf eines Rückkoppel-Signals der Ablenkeinheit,
- Fig. 8: den zeitlichen Verlauf eines Spiegel-Ablenk-Signals der Ablenkeinheit,
- Fig. 9: den zeitlichen Verlauf einer Spiegelablenkung der Ablenkeinheit mit eingezeichneten diskreten Teilbereichen,
- Fig. 10: den zeitlichen Verlauf eines Synchronisierungs-Signals,
- Fig. 11: den zeitlichen Verlauf eines Synchronisierungs-Signals in vergrößerter Darstellung,
- Fig. 12: den zeitlichen Verlauf des Zählerwerts in einer Zeitgebereinheit des Mikrocontrollers,
- Fig. 13: ein Beispiel für ungenaues Timing beispielsweise in Folge von Interrupts einer herkömmlichen Mikrocontroller-Routine.

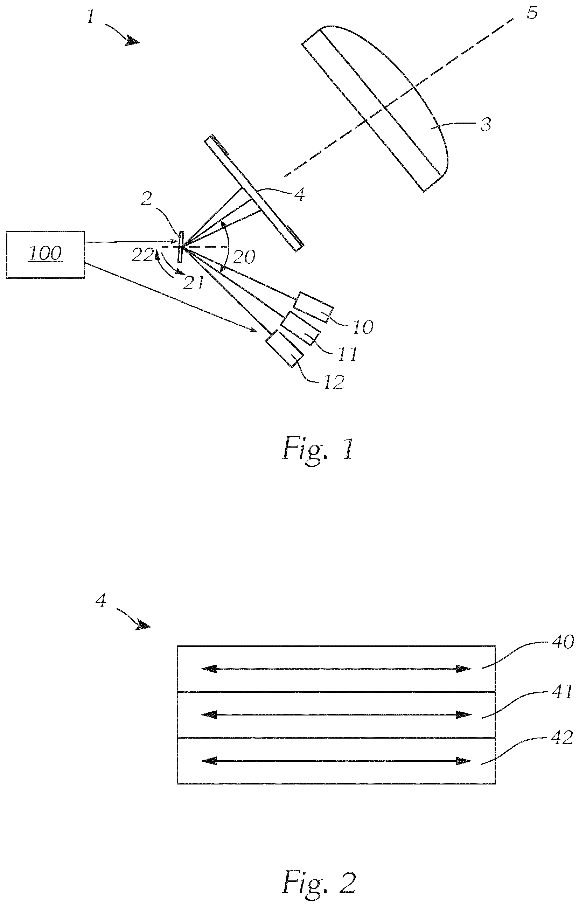

Unter Bezugnahme auf Fig. 1 bis Fig. 8 werden nun Ausführungsbeispiele der Erfindung näher erläutert. Insbesondere sind für die Erfindung in einem Scheinwerfer wichtige Teile dargestellt, wobei klar ist, dass ein Scheinwerfer noch viele andere, nicht gezeigte Teile enthält, die einen sinnvollen Einsatz in einem Kraftfahrzeug, wie insbesondere einem PKW oder Motorrad, ermöglichen. Der Übersichtlichkeit halber sind daher beispielsweise Kühlvorrichtungen für Bauteile, weitere Ansteuerungselektronik, weitere optische Elemente, mechanische Verstelleinrichtungen beziehungsweise Halterungen oder Gehäuse nicht gezeigt. In den folgenden Figuren bezeichnen - sofern nicht anders angegeben - gleiche Bezugszeichen gleiche Merkmale.

**Fig. 1** zeigt einen Kraftfahrzeugscheinwerfer 1, umfassend drei Laserlichtquellen 10, 11, und 12, ein durch die Laserlichtquellen 10, 11 und 12 bestrahlbares und anregbares Konversionsmittel 4 zur Abstrahlung von sichtbarem Licht, zumindest eine im Strahlengang zwischen den Laserlichtquellen 10, 11, und 12 und dem Konversionsmittel 4 angeordnete steuerbare Ablenkvorrichtung 2 zur räumlichen Ablenkung des Laserlichts innerhalb eines in eine Lichtverteilung abbildbaren Konversionsbereichs 40, 41, 42 des Konversionsmittels 4, und eine Projektionsoptik 3 zur Abbildung des innerhalb des Konversionsbereiches 40, 41, 42 gewandelten Lichts hin zu einer auf eine Fläche projizierbaren Lichtverteilung. Ferner umfasst der Kraftfahrzeugscheinwerfer 1 zumindest eine Modulationsvorrichtung 200, die
a) zur zeitlichen Steuerung der Laserlichtintensität des durch die Laserlichtquellen 10, 11 und 12 abgestrahlten Lichts, sowie
b) zur Steuerung der räumlichen Ablenkung des Laserlichts durch die Ablenkvorrichtung 2 eingerichtet ist.

Dabei ist der Modulationseinheit 200 zur digitalen Umsetzung bzw. Abwicklung der zeitlichen Steuerung ein Mikrocontroller 100 zugeordnet. Erfindungsgemäß weist der Mikrocontroller 100 zumindest einen Timer und einen DMA-Controller auf, wobei der Mikrocontroller 100 dazu eingerichtet ist, in Abhängigkeit von dem Timer direkt DMA Operationen zu triggern, mittels deren die zeitliche und räumliche Steuerung gemäß den Punkten a) und b) erfolgt.

Anders ausgedrückt, zeigt **Fig. 1** einen Fahrzeugscheinwerfer 1, bei welchem Laserstrahlen von Lichtquellen 10-12, beispielsweise in Form von Halbleiterlichtquellen wie Laserdioden, erzeugt werden und mittels einer Ablenkvorrichtung 2 auf ein Konversionselement 4 und in weiterer Folge in die Abstrahlrichtung des Fahrzeugscheinwerfers 1 abgelenkt werden, in welcher eine Projektionsoptik 3, beispielsweise in Form einer Anordnung einer oder mehrerer Linsen, angeordnet ist. Die Ablenkvorrichtung 2 ist beispielsweise als Mikroablenkeinheit mit einem steuerbaren Mikrospiegel ausgeführt, welcher dazu eingerichtet ist, die Laserstrahlen der Lichtquellen 10-12 unter einem Ablenkwinkel 20 abzulenken.

Zusätzlich ist ein Konversionselement 4 im Strahlengang zwischen der Ablenkvorrichtung 2 und der Projektionsoptik 3 angeordnet, um beispielsweise eine Konversion von UV-Licht oder blauem Laserlicht, welches von den Lichtquellen 10-12 erzeugt ist, in weißes sichtbares Licht zu erreichen. Das Konversionselement 4 kann lichtdurchlässig (transmittierend) oder zumindest teilweise reflektierend, insbesondere als Phosphor, ausgeführt sein. Zudem umfasst der Fahrzeugscheinwerfer einen Mikrocontroller 100, der zur Ansteuerung der Lichtquellen 10-12 und der Ablenkvorrichtung 2 mit diesen verbunden ist.

Mit anderen Worten umfasst der Kraftfahrzeugscheinwerfer 1, welcher für einen Einbau in ein Fahrzeug vorgesehen ist, drei Lichtquellen 10-12, eine Ablenkvorrichtung 2, ein Konversionselement 4 und eine Projektionsoptik 3 in Form einer Projektionslinse, sowie einen Mikrocontroller 100 und eine elektronische Schaltung, auf welche im Weiteren näher eingegangen wird.

Die Lichtquellen 10-12 sind eingerichtet, Licht in Richtung der Ablenkvorrichtung 2 zu emittieren. Die Ablenkvorrichtung 2 ist dazu eingerichtet, die emittierte Lichtverteilung auf das Konversionselement 4 und in weiterer Folge auf die Projektionsoptik 3 umzulenken. Die Ablenkvorrichtung 2 ist von einer Steuervorrichtung mittels eines Ablenk-Parametersatzes konfigurierbar.

Fig. 2 zeigt schematisch das Konversionselement 4 mit einer Konversionsfläche, über welche der oder die Laserstrahlen sehr schnell in horizontaler Richtung abgelenkt werden (wie darin durch Pfeile angedeutet wird), und ein Leuchtbild schreiben, das über eine Projektionsoptik 3 in Richtung der Abstrahlrichtung 5 dann als Lichtverteilung auf die Straße projiziert wird. Die Abstrahlrichtung 5 kann beispielsweise durch eine Nulllage definiert sein, in der der Ablenkspiegel nicht verstellt ist.

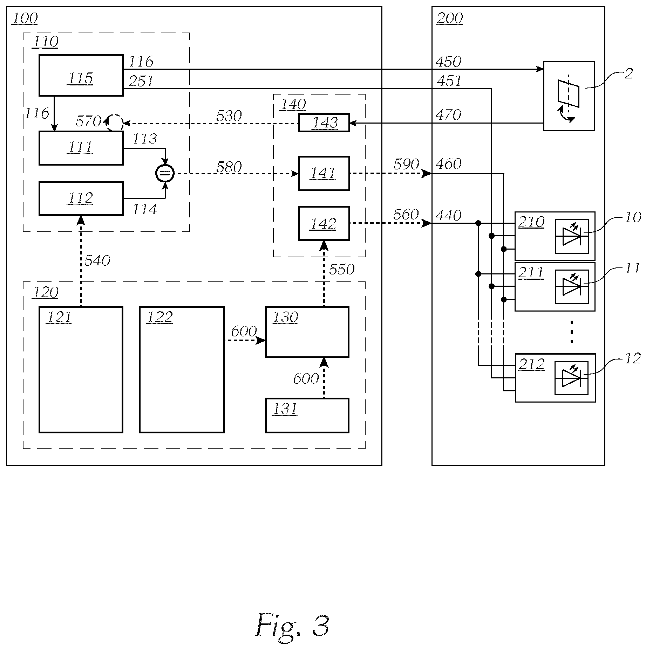

In der Fig. 3 ist ein Blockschaltbild einer elektronischen Schaltung gezeigt, bei welcher von einem Mikrocontroller 100 eine Ablenkvorrichtung 2, sowie drei Leuchtkanäle 210-212 ansteuerbar sind.

Andere Ausführungsformen der Erfindung können einen, zwei, vier, fünf oder mehr Leuchtkanäle umfassen.

Die Schaltung zeigt den Mikrocontroller 100, welcher eine Zeitgebereinheit 110, einen Speicher 120, einen Zwischenpuffer 130 und eine Peripheriesteuervorrichtung 140 aufweist. Es ist klar, dass der Mikrocontroller 100 weitere Funktionseinheiten aufweist, beispielsweise eine arithmetische Logikeinheit, Register, Kommunikations-Schnittstellen, Ein-/Ausgabeschnittstellen, Analog-Digital-Umsetzer, Programmspeicher, etc..

Ferner weist der Mikrocontroller 100 eine DMA-Funktion auf, welche in den Figuren nicht gesondert dargestellt ist, allerdings im Folgenden genauer beschrieben ist.

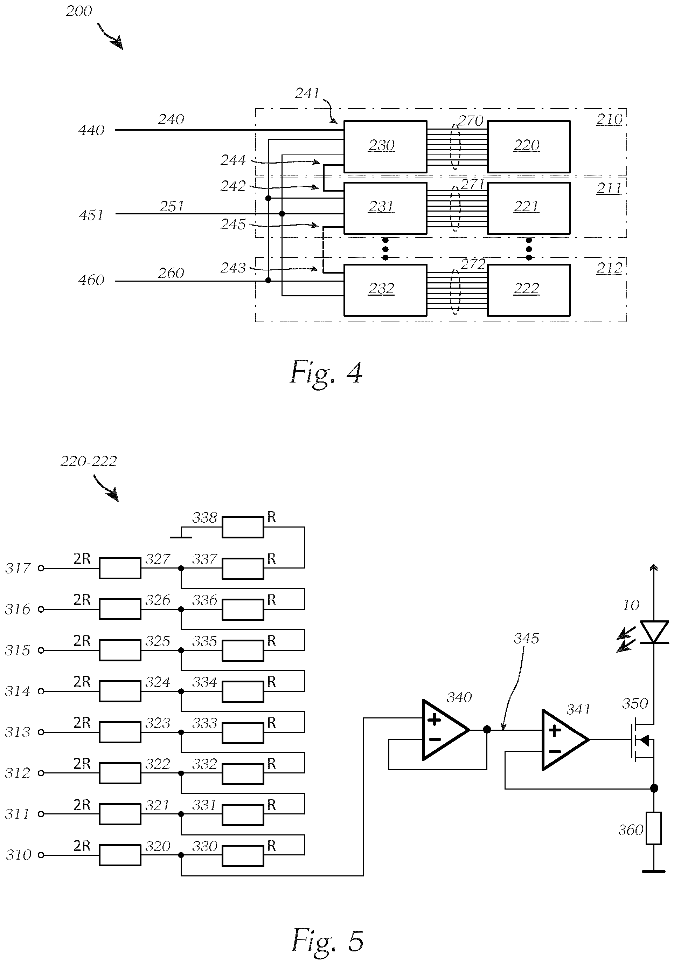

Der Mikrocontroller 100 ist zur Ansteuerung der jeweiligen Leuchtkanäle 210-212 vorgesehen. Die **Fig. 4** und **Fig. 5** zeigen ein Ausführungsbeispiel für eine Modulationsvorrichtung 200 zur Ansteuerung der Leuchtkanäle 210-212.

Mittels Digital-zu-Analog-Konvertern 220-222 werden die Lichtquellen 10-12 der einzelnen Leuchtkanäle 210-212 angesteuert.

Jeder Leuchtkanal 210-212 kann von dem Mikrocontroller 100 über einen parallelen, finalen Bus 270-272 angesteuert werden, welcher jeweils acht Busleitungen umfasst.

Der Mikrocontroller 100 verfügt über eine Daten-Schnittstelle bzw. einem Datenausgang, über welche ein Datensignal übertragen wird.

Die drei Leuchtkanäle 210-212 umfassen jeweils einen Kanal-Wandler 230-232, einen Digital-zu-Analog-Konverter 220-222 und die Lichtquelle 10-12.

Die Kanal-Wandler 230-232 sind in diesem Beispiel jeweils ein Schieberegister, wobei aber auch andere Logik-Schaltungen dafür geeignet sein können, wie beispielsweise Datenbusse nach dem RS-232 oder USB-Standard. Es ist dabei klar, dass bei der Verkettung mehrerer Leitungen zu einem Datenbus, insbesondere seriellen Bus, jeweils eine Schaltungslogik erforderlich sein kann, welche dazu eingerichtet ist, serielle Signale über einen seriellen Eingang zu empfangen, ggf. zu speichern und über einen seriellen Ausgang wieder zu senden und dadurch einen verketteten seriellen Bus zu schaffen. Der Fachperson ist klar, dass eine entsprechende Architektur für einen parallelen Bus geschaffen werden kann, wobei bei der Umsetzung eines parallelen Busses die eingangs genannten Nachteile entsprechend berücksichtigt werden müssen.

Alternativ kann auch eine Daisy-Chain-Architektur für den zweiten Bus eingesetzt werden, in welcher ein serieller Eingang dem seriellen Ausgang einer an die Architektur angeschlossenen Baugruppe entspricht. Dabei kann es erforderlich sein, dass beispielsweise eine Logikschaltung die Zuordnung der empfangenen seriellen Daten zu den jeweiligen Leuchtkanälen durchführt. Diese Variante ist nicht dargestellt.

Grundsätzlich kann es für eine Anwendung auch sinnvoll sein, wenn für den zweiten Bus beispielsweise ein paralleler Bus eingesetzt wird. Dies kann insbesondere für höhere Übertragungsgeschwindigkeiten sinnvoll sein, sodass ein ggf. höherer Aufwand für einen parallelen Bus auf einer Leiterplatte in Kauf genommen wird. Diese Variante ist nicht dargestellt.

Der Mikrocontroller 100 ist dazu eingerichtet, zumindest einen Helligkeitsdatensatz zur Ansteuerung der Lichtquelle 10-12 über einen zweiten Bus 240 seriell an die drei Leuchtkanäle 210-212 zu übertragen und mit einem Taktsignal über eine Taktleitung 251 und einem Steuersignal über eine Steuerleitung 260 anzusteuern.

Jeder Kanal-Wandler 230-232 ist dazu eingerichtet, den zumindest einen Helligkeitsdatensatz von dem zweiten Bus 240 seriell mit Hilfe des Taktsignals von der Taktleitung 251 zu empfangen und den zumindest einen Helligkeitsdatensatz über einen, jedem Kanal-Wandler 230-232 zugeordneten finalen Bus 270-272 parallel zu übertragen, wenn ein Steuersignal über die Steuerleitung 260 von dem Mikrocontroller 100 empfangen wird.

Jeder Digital-zu-Analog-Konverter 220-222 ist dazu eingerichtet, den zumindest einen Helligkeitsdatensatz von dem finalen Bus 270-272 parallel zu empfangen und in jeweils ein analoges Treibersignal für die Lichtquellen 10-12 zu konvertieren.

Die Lichtquellen 10-12 sind jeweils eingerichtet, mit dem analogen Treibersignal über eine Treiberleitung 345 angesteuert zu werden und die Helligkeit der Lichtquelle 10-12 wird entsprechend dem analogen Treibersignal gesteuert.

Ferner ist die Lichtquelle 10-12 eingerichtet, Licht in Richtung der Ablenkvorrichtung 2 zu emittieren, von wo es abgelenkt wird und in einem eingebauten Zustand in einem Fahrzeug auf die Fahrbahn vor das Fahrzeug ein Lichtbild projiziert.

Im Detail kann die Anordnung auch wie folgt beschrieben werden:
Jeder der drei Leuchtkanäle 210-212 weist einen Kanal-Wandler 230-232, einen Digital-zu-Analog-Konverter 220-222 und eine Lichtquelle 10-12 auf, wobei
- der jeweilige Kanal-Wandler 230-232 einen Dateneingang 241-243, einen Takteingang und einen Steuereingang aufweist, und dazu eingerichtet ist, über den Takteingang ein Modultaktsignal 451 zu empfangen, und über den Steuereingang ein Steuersignal zu empfangen, und mit Hilfe des Modultaktsignals 451 vom Dateneingang 241-243 Lichtdaten zu empfangen, und
- der jeweilige Kanal-Wandler 230-232 über einen finalen Bus 270-272 mit dem jeweiligen Digital-zu-Analog-Konverter 220-222 verbunden ist und dazu eingerichtet ist, die Lichtdaten mit Hilfe des Steuersignals über den finalen Bus 270-272 zu senden, und
- der jeweilige Digital-zu-Analog-Konverter 220-222 über eine Treiberleitung 345 mit der Lichtquelle 10-12 verbunden ist und dazu eingerichtet ist, die Lichtdaten von dem finalen Bus 270-272 zu empfangen, in ein analoges Treibersignal zu konvertieren und über die Treiberleitung 345 auszugeben, und
- die jeweilige Lichtquelle 10-12 dazu eingerichtet ist, mittels dem von der Treiberleitung 345 empfangenen analogen Treibersignal angesteuert zu werden und Licht in Form der Lichtverteilung zu emittieren,
und der Mikrocontroller 100 dazu eingerichtet ist,
- ein Modultaktsignal 451 zu erzeugen und über die Taktleitung 251, welche mit dem Takteingang verbunden ist, auszugeben, und
- ein Steuersignal zu erzeugen und über die Steuerleitung 260, welche mit dem Steuereingang verbunden ist, auszugeben, und
- zumindest einen Helligkeitsdatensatz zur Ansteuerung der Lichtquelle 10-12 des zumindest einen Leuchtkanals 210-212 in Form von Lichtdaten zu erzeugen und über den zweiten Bus 240, welcher mit dem Dateneingang 241-243 des Kanal-Wandler 230-232 verbunden ist, mit Hilfe eines Modultaktsignals und des Steuersignals zu übertragen.

Der im Mikrocontroller 100 enthaltene Taktgeber 115 erzeugt neben dem Systemtaktsignal 450 auch ein Modultaktsignal 451 zum Betrieb der Kanal-Wandler 230-232.

Das Systemtaktsignal **450** dient auch zur Ansteuerung der Ablenkvorrichtung 2.

Die drei Leuchtkanäle 210-212, deren jeweilige Kanal-Wandler 230-232 mittels dem zweiten Bus 240 nacheinander in Serie geschaltet sind, beinhalten jeweils einen vorhergehenden Kanal-Wandler 230, 231 und jeweils einen nachfolgenden Kanal-Wandler 231, 232.

Der jeweils vorhergehende Kanal-Wandler 230, 231 ist in der Abfolge am zweiten Bus 240 vor dem jeweils nachfolgenden Kanal-Wandler 230, 231 angeordnet.

Der jeweils vorhergehende Kanal-Wandler 231, 232 weist einen Datenausgang 244, 245 auf, welcher mit dem serielle Dateneingang 242-243 des jeweils nachfolgenden Kanal-Wandler 231, 232 mittels dem zweiten Bus 240 verbunden ist.

Der jeweils vorhergehenden Kanal-Wandler 230-232 ist dazu eingerichtet, mit Hilfe des Modultaktsignals 451 vom Dateneingang 242, 243 Lichtdaten zu empfangen und über den Datenausgang 244, 245 wieder auszugeben.

Der erste Bus 270-272 ist in diesem Ausführungsbeispiel ein paralleler Bus.

Der zweite Bus 240 ist in diesem Ausführungsbeispiel ein serieller Bus.

Der Kanal-Wandler 230-232 des zumindest einen Leuchtkanals 210-212 ist in diesem Ausführungsbeispiel jeweils ein Seriell-zu-Parallel-Wandler.

Der erste Seriell-zu-Parallel-Wandler bzw. Kanal-Wandler 230 ist in der Abfolge am seriellen Bus bzw. zweiten Bus 240 als Erstes angeordnet.

Die drei Leuchtkanäle 210-212, deren Seriell-zu-Parallel-Wandler 230-232 mittels dem seriellen Bus 240 nacheinander in Serie geschaltet sind, weisen einen letzten Seriell-zu-Parallel-Wandler 232 auf. Der letzte Seriell-zu-Parallel-Wandler 232 ist in der Abfolge am seriellen Bus 240 als Letztes angeordnet.

Die Leuchtkanäle 210-212 sind in diesem Beispiel alle mit demselben seriellen Bus 240 verbunden.

Die **Fig. 5** zeigt eine bevorzugte Ausführungsvariante eines Digital-zu-Analog-Konverters 220-222 mittels einem R/2R-Netzwerk, welches digitale Werte in eine Analogspannung umsetzt und eine Lichtquelle 10 mittels einer Treiberschaltung, die aus zwei Operationsverstärkern 340, 341 und einem Leistungstransistor 350 gebildet ist, ansteuert. Zur Einstellung des Stroms durch die Lichtquelle 10, hier in Form einer Laser-Diode, dient ein Serienwiderstand 360.

Das R/2R-Widerstandsnetzwerk, gefolgt von einem oder mehreren Operationsverstärkern 340, 341 und dem Transistor 350, welcher als Modulator agiert, ist für die vorgesehene Anwendung in einem Fahrzeugscheinwerfer 1 einfacher und auch kostengünstiger als beispielsweise eine integrierte Schaltung.

Eine Treiberleitung 345 verbindet einen ersten Schaltungsteil, welcher den Digital-zu-Analog-Konverters 220-222 bildet, und einen zweiten Schaltungsteil, welcher den Treiber der Lichtquelle 10-12 bildet. In diesem Beispiel verbindet die Treiberleitung 345 die beiden Operationsverstärker 340, 341.

Die Operationsverstärker 340, 341 sind zur Entkopplung des ersten vom zweiten Schaltungsteil vorgesehen. Ansonsten müsste der höchstwertigste digitale Eingang 10, das heißt das höchste Bit des Helligkeitsdatensatzes, bei gesetztem digitalem Eingangssignal, d.h. bei gesetztem Bit, einen hohen Anteil der Ausgangslast des R/2R-Widerstandsnetzwerks 220-222 übernehmen.

Das R/2R-Netzwerk ist aus Widerständen 320-327 und 330-338 mit den Werten R und 2R aufgebaut. Die einzelnen digitalen Eingänge 310-317 liegen entweder auf Masse oder auf der Referenzspannung. Jeder digitale Eingang trägt so seinen spezifischen Teil zur resultierenden Ausgangsspannung bei.

Zu den Vorteilen eines R/2R-Netzwerks zählen die sehr hohe Digital-zu-Analog-Konversions-Geschwindigkeit bei gleichzeitig sehr hoher Genauigkeit, sowie der einfache Aufbau durch gleichartige, kostengünstige Bauteile.

Allerdings muss bei einem R/2R-Netzwerks darauf geachtet werden, dass die Widerstände in ihrem Nennwert möglichst genau gleich sind. Dies betrifft insbesondere jene Widerstände, die die für die höherwertigen Bits eingesetzt werden.

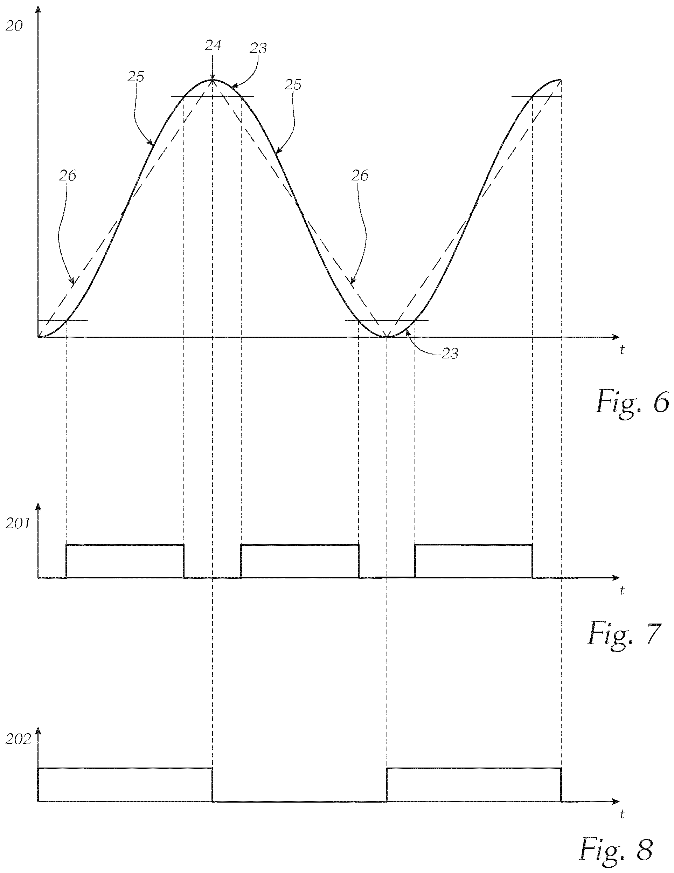

**Fig. 6** stellt den zeitlichen Verlauf des Ablenkwinkels 20 der Ablenkvorrichtung 2 dar. Es ist im Verlauf ein annähernd linearer Bereich 25 mit einer positiven Steigung erkennbar, welcher der Ablenkung der Ablenkvorrichtung 2 in einer ersten Richtung 21 entspricht, sowie ein annähernd linearer Bereich 25 mit einer negativen Steigung, welcher der Ablenkung der Ablenkvorrichtung 2 in einer zweiten Richtung 22 entspricht. In den Bereichen mit der positiven und der negativen Steigung bzw. der ersten und der zweiten Richtung 21, 22 erfolgt simultan eine Ansteuerung der Lichtquellen 10-12, welche Licht auf die Ablenkvorrichtung 2 emittieren, und welches von der Ablenkvorrichtung 2 in die Abstrahlrichtung 5 des Scheinwerfers 1 umgelenkt wird.

Im Übergangsbereich von der positiven zur negativen Steigung bzw. von der ersten zur zweiten Richtung 21, 22 und umgekehrt liegt jeweils ein Wendebereich 23 der Ablenkvorrichtung 2. Im Wendebereich 23 erfolgt keine Ansteuerung beziehungsweise keine Modulation der Lichtquellen 10-12.

**Fig. 7** stellt den zeitlichen Verlauf des digitalen Rückkoppel-Signals 201 dar, welches durch die Flanken im Signalwechsel den annähernd linearen Bereich 25 der positiven und der negativen Steigung des Ablenkwinkels 20 begrenzt, wobei das Rückkoppel-Signal 201 bei der Erzeugung der Modulation der Lichtquellen 10-12 genützt werden kann.

**Fig. 8** stellt den zeitlichen Verlauf eines digitalen Spiegel-Ablenk-Signals 202 dar, welches durch die Flanken im Signalwechsel des Spiegel-Ablenk-Signals 202 den Bereich der positiven Steigung von dem Bereich der negativen Steigung des Ablenkwinkels 20 begrenzt, d.h. ein Wendepunkt 24 zwischen der positiver Steigung der ersten Richtung 21 und der negativer Steigung der zweiten Richtung 22 des Verlaufs des Ablenkwinkels 20 definiert.

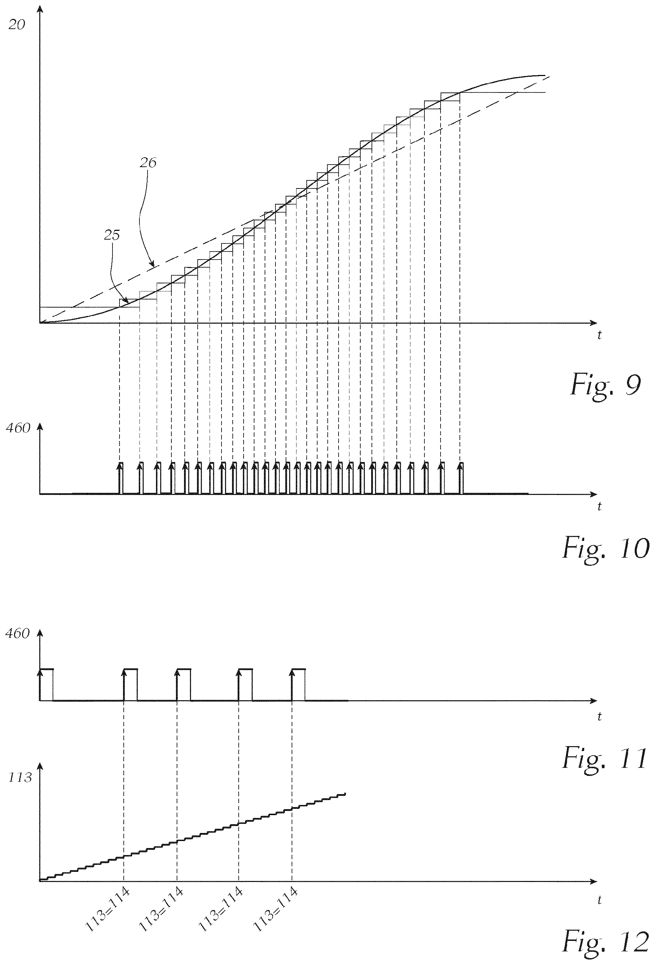

In **Fig. 9** ist ein Ausschnitt des zeitlichen Verlaufs des Ablenkwinkels 20 mit positiver Steigung gezeigt, in welchem zusätzlich Teilabschnitte erkennbar sind, aus welchen der Verlauf zusammengesetzt ist. Die Unterteilung in Teilabschnitte dient dazu, den nicht exakt linearen Verlauf 25 der Ablenkung des Ablenkwinkels 20 der Ablenkvorrichtung 2 zu verbessern. Durch Unterteilung des zeitlichen Verlaufs der Ablenkung der Ablenkvorrichtung 2 in Teilabschnitte kann eine teilweise Korrektur von Abweichungen des tatsächlichen Verlaufs 25 gegenüber einem idealen, linearen Verlauf 26 erfolgen.

Damit wird erreicht, dass gleichmäßige Bereiche für den Ablenkwinkel 20 erreicht werden, und somit ein günstiger optischer Eindruck des erzeugten Lichtbilds für den Betrachter bewirkt wird.

**Fig. 10** zeigt den zeitlichen Verlauf des Steuersignals 460 in Zusammenhang mit den erwähnten Teilabschnitten, und **Fig. 11** eine vergrößerte Darstellung eines Ausschnitts der Fig. 10. Beispielsweise ist jeweils bei einer ansteigenden Flanke des Steuersignals 460 der für den jeweiligen Teilabschnitt vorgesehene Ist-Wert des Ablenkwinkels 20 erreicht. Durch die Abweichung zwischen Ist-Werten und zugehörigen Soll-Werten ergeben sich unterschiedliche Zeitdauern zwischen den Pulsen des Steuersignals 460, welche bevorzugt jeweils eine konstante Pulsdauer aufweisen. Somit kann eine Korrektur eines Ist-Werts gemäß dem tatsächlichen Verlauf 25 gegenüber dem jeweiligen Soll-Wert gemäß dem idealen Verlauf 26 erreicht werden.

Würde die vorher beschriebene Korrektur nicht durchgeführt werden, so würden die Pulse des Steuersignals 460 jeweils dieselbe Periodendauer bzw. denselben Tastgrad aufweisen.

**Fig. 12** zeigt den zeitlichen Verlauf des Zählerwerts 113, sowie die Zeitpunkte, in welchen eine jeweilige Übereinstimmung des Zählerwerts 113 mit dem Vergleichswert 114 vorliegt.

**Bezugszeichenliste**

| | | | |
|---|---|---|---|
| 1 | Fahrzeugscheinwerfer | 200 | Mod ulationsvorrichtung |
| 2 | Ablenkvorrichtung | 201 | Rückkoppel-Signal |
| 3 | Projektionsoptik | 202 | Spiegel-Ablenk-Signal |
| 4 | Lichtkonverter | 210-212 | Leuchtkanal |
| 5 | Abstrahlrichtung des Fahrzeugscheinwerfers | 220-222 | Digital-zu-Analog-Konverter, R/2R-Netzwerk mit Lichtquelle |
| 10-12 | Lichtquelle | 230-232 | Kanal- Wandler |
| 20 | Ablenkwinkel | 240 | Datenbus |
| 21, 22 | Richtung | 241-243 | Dateneingang |
| 23 | Wendebereich | 244-245 | Datenausgang |
| 24 | Wendepunkt | 251 | Modultaktleitung |
| 25 | annähernd linearer Bereich | 260 | Steuerleitung |
| 26 | idealer Bereich | 270-272 | zweiter Bus |
| 40-42 | Lichtzeile | 310-317 | digitaler Eingang |
| 100 | Mikrocontroller | 320-327, 330-338, 360 | Widerstand |
| 110 | Zeitgebereinheit | | |
| 111 | Zählerregister | 340, 341 | Operationsverstärker |
| 112 | Vergleichsregister | 345 | Treiberleitung |
| 113 | Zählerwert | 350 | Transistor |
| 114 | Vergleichswert | 360 | Widerstand |
| 115 | Taktgeber | 440 | Datensignal |
| 116 | Systemtaktleitung | 450 | Systemtaktsignal |
| 120 | Speicher | 451 | Modultaktsignal |
| 121 | Zeittabelle | 460 | Steuersignal |
| 122 | Helligkeitstabelle | 470 | Rückkoppel-Signal |
| 130 | Zwischenpuffer | 530 | Zähler starten |
| 131 | Konfigurationsdaten | 540 | Vergleichswert laden |
| 140 | Peripheriesteuervorrichtung | 550 | Helligkeitswert laden |
| 141 | binärer Ausgabekanal | 560 | Datensignal ausgeben |
| 142 | serieller Ausgabekanal | 570 | Zähler erhöhen |
| 143 | binärer Eingangskanal | | |
| 580 | Zählerwert mit Vergleichswert vergleichen | 590 | Synchronisationssignal ausgeben |
| | | 600 | Prüfen, ob Wechsel im Signal 202 |

## Patentansprüche

1. Kraftfahrzeugscheinwerfer (1), umfassend
- zumindest eine Laserlichtquelle (10,11,12),
- ein durch die zumindest eine Laserlichtquelle (10,11,12) bestrahlbares und anregbares Konversionsmittel (4) zur Abstrahlung von sichtbarem Licht,
- zumindest ein im Strahlengang zwischen der zumindest einen Laserlichtquelle (10,11,12) und dem Konversionsmittel (4) angeordnete steuerbare Ablenkvorrichtung (2) zur räumlichen Ablenkung des Laserlichts innerhalb eines in eine Lichtverteilung abbildbaren Konversionsbereichs (40, 41, 42) des Konversionsmittels (4),
- eine Projektionsoptik (3) zur Abbildung des innerhalb des Konversionsbereiches (40,41,42) gewandelten Lichts hin zu einer auf eine Fläche projizierbaren Lichtverteilung, und
- zumindest eine Modulationsvorrichtung (200)
a) zur zeitlichen Steuerung der Laserlichtintensität des durch die zumindest eine Laserlichtquelle (10, 11, 12) abgestrahlten Lichts, sowie
b) zur Steuerung der räumlichen Ablenkung des Laserlichts durch das Ablenkvorrichtung (2),
wobei der Modulationsvorrichtung (200) zur digitalen Umsetzung der zeitlichen Steuerung ein Mikrocontroller (100) zugeordnet ist,
**dadurch gekennzeichnet, dass**
der Mikrocontroller (100) zumindest einen Timer und einen DMA-Controller aufweist, wobei der Mikrocontroller (100) dazu eingerichtet ist, in Abhängigkeit von dem Timer direkt DMA Operationen zu triggern, mittels deren die zeitliche und räumliche Steuerung gemäß den Punkten a) und b) erfolgt.

2. Kraftfahrzeugscheinwerfer (1) nach Anspruch 1, wobei der Mikrocontroller (100) einen DMA-Controller und ein Compare-Register aufweist, wobei der Mikrocontroller (100) dazu eingerichtet ist, den Timer mit über einen DMA-Kanal zur Verfügung gestellten Wert zu vergleichen, um bei Feststellung von Wertegleichheit keine Interrupt-Operation, sondern eine DMA-Operation auszulösen, die zur Festlegung der zeitlichen Abfolge der Steuerung gemäß den Punkten a) und b) eingesetzt ist.

3. Kraftfahrzeugscheinwerfer (1) nach Anspruch 1 oder 2, wobei der Kraftfahrzeugscheinwerfer (1) zumindest zwei Laserlichtquellen (10,11,12), vorzugsweise drei, vier fünf oder mehr Laserlichtquellen, aufweist, die zur Abstrahlung von Licht auf die Ablenkvorrichtung (2) und damit auf das Konversionsmittel (4) eingerichtet sind, wobei die Abstrahlung der Laserlichtquellen (10,11,12) auf das Konversionsmittel (4) dergestalt zueinander versetzt ist, dass zeilenförmig formschlüssig nebeneinander und/oder übereinanderliegende Konversionsbereiche (40,41,42) an dem Konversionsmittel (4) durch horizontale und/oder vertikale Ablenkung des Laserlichts der Laserlichtquellen (10,11,12) ausleuchtbar sind, wobei jeder Laserlichtquelle (10,11,12) ein Abschnitt des Konversionsbereich (40,41,42) zugeordnet ist, wobei die Ablenkvorrichtung (2) zur Ablenkung des Laserlichts der Laserlichtquellen (10,11,12) zumindest einen steuerbaren Spiegel aufweist, wobei insbesondere vorgesehen sein kann, dass mehrere ansteuerbare Spiegel vorgesehen sind, mittels welchen die Ablenkung des Laserlichts einzeln vorgenommen werden kann.

4. Kraftfahrzeugscheinwerfer (1) nach Anspruch 1 oder 2, wobei der Kraftfahrzeugscheinwerfer (1) zumindest zwei Laserlichtquellen (10,11,12), vorzugsweise drei, vier fünf oder mehr Laserlichtquellen, aufweist, die zur Abstrahlung von Licht auf die Ablenkvorrichtung (2) und damit auf das Konversionsmittel (4) eingerichtet sind, wobei die Abstrahlung der Laserlichtquellen (10,11,12) auf das Konversionsmittel (4) dergestalt zueinander vertikal versetzt ist, dass zeilenförmig formschlüssig übereinanderliegende Konversionsbereiche (40,41,42) an dem Konversionsmittel (4) durch horizontale Ablenkung des Laserlichts der Laserlichtquellen (10,11,12) ausleuchtbar sind, wobei jeder Laserlichtquelle (10,11,12) ein zeilenförmiger Konversionsbereich (40,41,42) zugeordnet ist.

5. Kraftfahrzeugscheinwerfer (1) nach einem der vorhergehenden Ansprüche, wobei der Mikrocontroller (100) dazu eingerichtet ist, zumindest einen Helligkeitsdatensatz zur Ansteuerung der zumindest einen Laserlichtquelle (10,11,12) über einen Datenbus (240) seriell an die Modulationsvorrichtung (200) zu übertragen, wobei der Helligkeitsdatensatz ein Feld an Dateneinträgen enthält, wobei jeder Dateneintrag die Soll-Helligkeit eines Pixels mit vorgegebener Höhe und Breite im Lichtbild einer Lichtverteilung einer Laserlichtquelle (10,11,12) repräsentiert, wobei jeder Laserlichtquelle (10,11,12) ein Leuchtkanal (210,211,212) der Modulationsvorrichtung (200) zugeordnet ist, wobei jedem Leuchtkanal (210,211, 212) ein gemeinsames Taktsignal über eine Taktleitung (251) und ein Steuersignal über eine Steuerleitung (260) zugeführt ist, wobei jedem Leuchtkanal (210,211,212) ein Kanal-Wandler (230,231,232) zugeordnet ist, wobei jeder Kanal-Wandler (230,231,232) dazu eingerichtet ist, den zumindest einen Helligkeitsdatensatz von dem Datenbus (240) seriell unter Berücksichtigung des Taktsignals zu empfangen und den zumindest einen Helligkeitsdatensatz sukzessive über einen, jedem Kanal-Wandler (230-232) zugeordneten finalen Bus (270-272) parallel zu übertragen, wenn ein Steuersignal über die eine der Modulationsvorrichtung zugeordnete Steuerleitung (260) von dem Mikrocontroller (100) empfangen wird.

6. Kraftfahrzeugscheinwerfer (1) nach Anspruch 5, wobei jedem finalen Bus (270-272) der Modulationsvorrichtung (200) ein Digital-zu-Analog-Konverter (220-222) zugeordnet ist, wobei jeder Digital-zu-Analog-Konverter (220-222) dazu eingerichtet ist, den zumindest einen Helligkeitsdatensatz von dem finalen Bus (270-272) parallel zu empfangen und in jeweils ein analoges Treibersignal für die jeweilige Laserlichtquelle (10,11,12) zu konvertieren.

7. Kraftfahrzeugscheinwerfer (1) nach Anspruch 6, wobei jeder Digital-zu-Analog-Konverter als R/2R-Netzwerk ausgebildet ist.

8. Kraftfahrzeugscheinwerfer (1) nach einem der Ansprüche 5 bis 7, wobei die Übertragung des zumindest einen Helligkeitsdatensatz von dem Mikrocontroller (100) hin zu der Modulationsvorrichtung (200) über eine Serial Peripheral Interface-Schnittstelle (SPI) über den Datenbus (240) erfolgt.

9. Kraftfahrzeug umfassend zumindest einen, vorzugsweise zwei Kraftfahrzeugscheinwerfer (1) nach einem der vorhergehenden Ansprüche.
